# FASCICULE DE BREVET EUROPEEN

(11) **EP 3 250 961 B1**
(45) Date de publication et mention de la délivrance du brevet: **06.03.2019**
(21) Numéro de dépôt: 16701750.8
(22) Date de dépôt: 26.01.2016
(51) Int. Cl.: G02C 1/02

(54) **MONTURE DE LUNETTES SANS BORD COMPRENANT AU MOINS UN ELEMENT DE SERRAGE FLEXIBLE**
RANDLOSE BRILLENFASSUNG MIT MINDESTENS EINEM FLEXIBLEN KLEMMELEMENT
RIMLESS GLASSES FRAME INCLUDING AT LEAST ONE FLEXIBLE CLAMPING ELEMENT

(30) Priorité: 27.01.2015 FR 1550594
(43) Date de publication de la demande: 06.12.2017
(73) Titulaire: Linossier, Pierre-Franck, 43000 Le Puy en Velay (FR); Miklitarian, Alain, 75014 Paris (FR); Delamour, Dominique, 78490 Les Mesnuls (FR); Chene, Richard, 92200 Neuilly (FR)
(72) Inventeur: LINOSSIER, Pierre-Franck, 43000 Le Puy en Velay (FR)
(74) Mandataire: Argyma
(86) Numéro de dépôt international: PCT/EP2016/051542
(87) Numéro de publication internationale: WO 2016/120256

(56) Documents cités:
- WO-A1-99/19760
- FR-A- 1 475 738
- FR-A1- 2 803 668
- FR-A1- 2 861 188

## Description

### DOMAINE TECHNIQUE GENERAL ET ART ANTERIEUR

La présente invention concerne le domaine des montures de lunettes et, en particulier, une monture de lunettes sans bord ou percée.

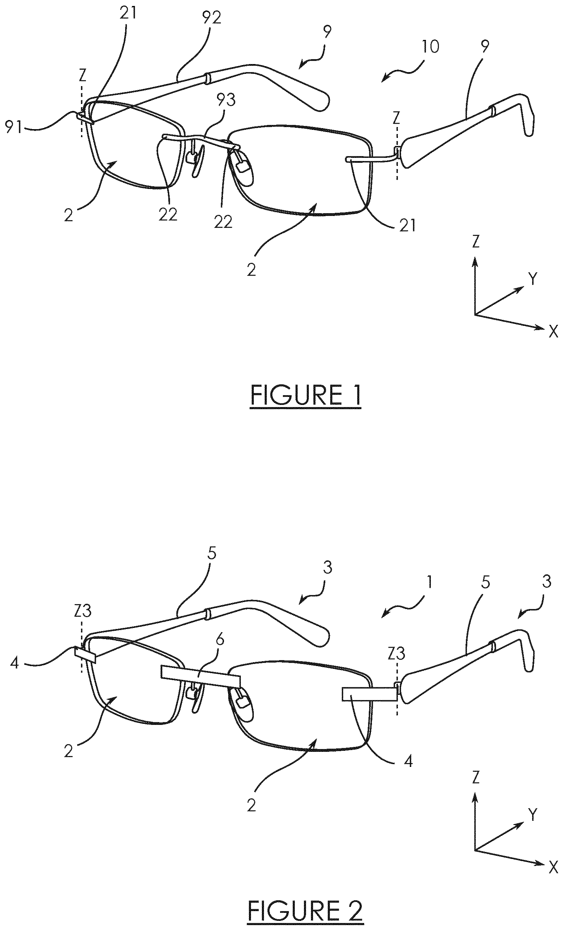

De manière classique, une monture percée ou sans bord, connue sous sa désignation anglaise "rimless", comporte deux branches latérales et un pont central qui sont adaptés pour être reliés à deux verres percés (un verre droite et un verre gauche). En référence à la figure 1, il est représenté une paire de lunettes à monture percée 10 qui comprend deux verres 2 reliés chacun à une branche 9 et au pont central 93. A cet effet, chaque verre 2 comporte au moins un orifice de branche 21, adapté pour permettre le boulonnage de la branche 9 au verre 2, et au moins un orifice de pont 22, adapté pour permettre le boulonnage du pont central 93 au verre 2. Les orifices de branche 21 et de pont 22 sont percés dans le verre 2. A titre d'exemple, la branche 9 comporte une tige filetée qui doit être glissée dans l'orifice de branche 21 du verre 2 afin de recevoir un écrou ou une cheminée en plastique dans laquelle peut être glissée une tige pour verrouiller la liaison.

En pratique, chaque branche 9 comporte une partie avant 91 reliée au verre 2 et une partie arrière 92 destinée à être en contact avec la tempe de l'utilisateur, les parties avant 91 et arrière 92 sont articulées ensemble autour d'un axe vertical Z de manière à permettre à la partie arrière 92 de la branche 9 de se replier.

Le montage d'une monture percée est complexe et longue à mettre en oeuvre étant donné que l'opticien doit, d'une part, glisser de manière précise la tige filetée de la branche/pont dans un orifice du verre et, d'autre part, visser l'écrou sur la tige filetée introduite dans ledit perçage. Ces opérations sont d'autant plus délicates que le diamètre de l'écrou est inférieur à 1-2 mm, ce qui oblige l'opticien à disposer d'outils adaptés.

De manière incidente, on connaît également par la demande de brevet US972053 une monture percée dans laquelle le pont central comporte une pince adaptée pour serrer le bord du verre. La pince comporte deux mâchoires reliées par une vis permettant de serrer lesdites mâchoires sur le verre de manière à solidariser le pont central au verre. De manière similaire, le montage d'une telle monture est complexe à mettre en oeuvre étant donné qu'il nécessite de manipuler un nombre élevé de pièces individuelles avec un outillage spécifique. D'autres montures sont décrites dans les documents FR 1475738 A et WO 99/19760 A1.

L'invention a donc pour but de remédier à ces inconvénients en proposant une monture sans bord qui soit simple et rapide à monter et qui puisse également être démontée de manière aisée.

### PRESENTATION GENERALE DE L'INVENTION

A cet effet, l'invention concerne une monture de lunettes sans bord telle que définie dans la revendicaltion 1.

Grâce à l'invention, le serrage du verre peut être réalisé de manière simple et aisée par un opticien sans outillage spécifique. En effet, il suffit à l'opticien d'ouvrir l'élément de serrage flexible à la manière d'une pince à linge afin de pincer le verre. L'élément de verrouillage permet avantageusement de sécuriser le serrage du verre en empêchant toute ouverture involontaire de l'élément de serrage.

De manière préférée, l'élément de verrouillage est monté de manière amovible dans ladite cavité afin de permettre le remplacement aisé de la monture.

Selon un aspect préféré, ledit élément de serrage est monobloc. Le nombre de pièces étant limité, le montage est facilité.

De manière préférée, ledit élément de serrage est en matière plastique de manière à être flexible tout en possédant un coût limité. Il va de soi que l'élément de serrage pourrait être réalisé dans d'autres matériaux, par exemple, en métal.

De préférence, au moins une desdites mâchoires comporte au moins une dent adaptée pour coopérer avec un orifice d'un verre de lunettes, ce qui permet d'indexer ladite mâchoire par rapport au verre et ainsi permettre un positionnement précis.

De manière avantageuse, ladite mâchoire comporte au moins deux dents afin d'empêcher toute rotation entre l'élément de serrage et le verre, ce qui améliore le montage de la monture.

De préférence, chaque dent est tronconique afin de permettre un serrage progressif du verre par l'élément de serrage ainsi qu'un centrage.

Selon un aspect préféré, la monture comprend au moins une branche de lunettes qui comprend une partie avant comportant au moins un élément de serrage flexible et une partie arrière comportant au moins un élément de verrouillage. De manière avantageuse, la branche intègre tous les éléments pour le serrage du verre.

De manière préférée, la partie avant comporte un unique élément de serrage flexible et la partie arrière comporte un unique élément de verrouillage.

De préférence, l'élément de serrage flexible est articulé avec l'élément de verrouillage afin de permettre un pliage de la branche. Ainsi, l'élément de verrouillage remplit une première fonction de verrouillage et une deuxième fonction d'articulation, ce qui est avantageux.

De préférence, la partie arrière de ladite branche comprend un premier élément et un deuxième élément qui sont reliés de manière réglable afin de permettre un réglage de la longueur des branches.

La monture comprenant un pont central, ledit pont central comprend un organe principal comprenant au moins un élément de serrage flexible, de préférence deux, et un organe auxiliaire comportant au moins un élément de verrouillage, de préférence deux. De manière avantageuse, avec deux éléments de serrage, l'organe principal relie deux verres ensemble.

De manière préférée, l'organe auxiliaire comporte une empreinte adaptée pour être en contact avec le nez de l'utilisateur. De manière avantageuse, il suffit de choisir l'organe auxiliaire dont l'empreinte est adaptée à la morphologie du nez de l'utilisateur afin d'obtenir une monture sur mesure à moindres coûts.

L'invention concerne également une paire de lunettes comportant deux verres et une monture de lunettes telle que présentée précédemment. De préférence, chaque verre est serré à ses deux extrémités latérales par un élément de serrage.

L'invention concerne en outre un procédé de montage d'une paire de lunettes sans bord telle que présentée précédemment, le procédé comprenant :
- une étape de pression de la cavité de l'élément de serrage flexible de manière à ouvrir les mâchoires ;
- une étape d'insertion d'un verre entre lesdites mâchoires ;
- une étape d'arrêt de la pression de manière à fermer lesdites mâchoires et serrer le verre ;
- une étape de montage de l'élément de verrouillage dans ladite cavité de l'élément de serrage de manière à verrouiller la fermeture desdites mâchoires sur le verre.

Un tel procédé est avantageux étant donné qu'il peut être réalisé de manière manuelle et rapide par un opticien. En outre, le démontage de la monture demeure aisé.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'une paire de lunettes avec une monture percée selon l'art antérieur ;
- la figure 2 est une représentation schématique d'une paire de lunettes avec une monture percée selon l'invention ;
- la figure 3 est une vue en coupe schématique d'une liaison entre un verre et une branche de la monture ;
- la figure 4 est une vue rapprochée de la figure 3 ;
- la figure 5 est une vue en perspective schématique de la figure 3 ;
- la figure 6 est une vue en coupe schématique d'une liaison entre un verre et un pont central de la monture ; et
- la figure 7 est une vue en perspective schématique de la figure 6 ;
- la figure 8 est une vue en perspective d'une autre forme de réalisation d'une liaison entre un verre et une branche de la monture ; et
- la figure 9 est une vue en coupe de certains éléments de la branche de la figure 8; et
- la figure 10 est une vue d'un élément de la partie arrière de la branche de la figure 8.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

En référence à la figure 2, il est présenté une paire de lunettes 1 comportant une monture percée ou sans bord, connue sous sa désignation anglaise "rimless", comportant deux branches latérales articulées 3 et un pont central 6 qui sont reliés à deux verres percés 2.

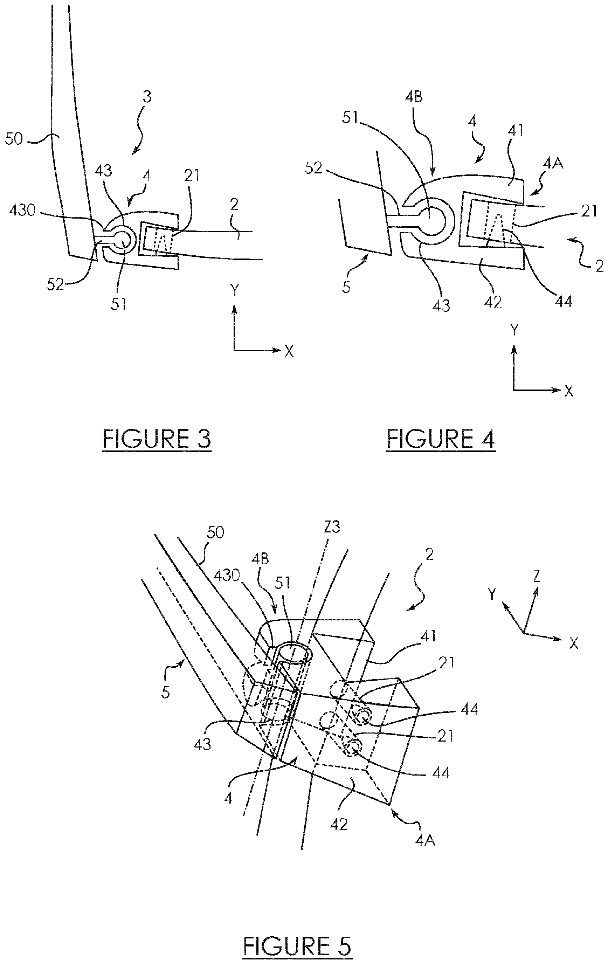

Par la suite, la paire de lunettes 1 va être présentée dans un repère orthogonal (X, Y, Z) dans lequel l'axe X s'étend horizontalement et parallèlement aux verres 2, l'axe Y s'étend parallèlement aux branches 3 en position d'utilisation et l'axe Z s'étend verticalement. En référence aux figures 3 à 5, il est représenté un verre 2 s'étendant sensiblement dans un plan (X, Z) dit « de face avant » et comportant à une extrémité deux orifices de branche 21 traversants réalisés, dans cet exemple, par perçage. Les orifices de branche 21 sont alignés verticalement selon l'axe Z. Il va de soi qu'ils pourraient être alignés selon tout axe appartenant au plan de face avant.

Comme illustré à la figure 2, chaque branche latérale 3 comporte une partie avant 4 reliée au verre 2 et une partie arrière 5 destinée à être en contact avec la tempe de l'utilisateur, les parties avant 4 et arrière 5 sont articulées ensemble autour d'un axe vertical Z3 de manière à permettre à la partie arrière 5 de la branche 3 de se replier.

Comme illustré aux figures 3 à 5, la partie arrière 5 de la branche 3 comporte un corps longitudinal 50, adapté pour venir en contact avec les tempes d'un utilisateur, et un élément de verrouillage 51 se présentant, dans cet exemple, sous la forme d'un cylindre vertical relié au corps longitudinal 50 par un tenon 52. Il va de soi que la section du cylindre pourrait être annulaire, ovale ou autre. Une section ovale permet avantageusement de définir des positions ouverte/fermée qui sont franches.

Dans cet exemple, en référence aux figures 3 à 5, la partie avant 4 de la branche 3 se présente sous la forme d'un élément de serrage flexible comportant une partie de connexion 4A comportant deux mâchoires 41, 42 adaptées pour serrer le verre de lunettes 2 et une partie de liaison 4B comportant une cavité 43, s'étendant verticalement, configurée pour permettre l'ouverture desdites mâchoires 41, 42 suite à une pression de ladite cavité 43. Autrement dit, à la manière d'une pince à linge, si l'opérateur déforme par pression la cavité 43, les mâchoires 41, 42 s'écartent du fait de la flexibilité de l'élément de serrage. Lors de la pression, la section de la cavité 43 diminue. Au contraire, en l'absence de pression, les mâchoires 41, 42 sont fermées et pincent entre elles le bord du verre 2. Par la suite, la première mâchoire 41 est désignée « mâchoire arrière 41 » tandis que la deuxième mâchoire 42 est désignée « mâchoire avant 42 ». Dans cet exemple, la partie avant 4 de la branche 3 s'étend longitudinalement.

De manière préférée, en référence aux figures 3 à 5, la mâchoire avant 42 comprend deux dents 44 adaptées pour s'introduire dans les deux orifices de branche 21 du verre 2. Ainsi, la position de la partie avant 4 de la branche 3 est parfaitement définie par rapport au verre 2. En outre, l'utilisation de dents 44 permet de serrer fermement le verre 2 en évitant tout déplacement relatif. Enfin, l'utilisation d'au moins deux dents 44 permet d'empêcher toute rotation relative entre la partie avant 4 et le verre 2, ce qui améliore la durée de vie de la paire de lunettes et leur esthétique. De préférence encore, chaque dent 44 est conique de manière à permettre un centrage optimal lors de son insertion dans un orifice de branche 21 ainsi qu'un serrage progressif. La présence de dents 44 sur la mâchoire avant 42 permet d'améliorer l'esthétique étant donné que ces dernières sont cachées lors de l'utilisation de la paire de lunettes. Néanmoins, de manière alternative ou cumulative, la mâchoire arrière 41 pourrait comprendre des dents 44. De manière préférée, les mâchoires 41, 42 sont convexes ou concaves afin de s'adapter à la forme du verre 2 à serrer.

Comme illustré à la figure 4, l'élément de verrouillage 51 de la branche 3 est configuré pour être monté dans la cavité 43 de la partie avant 4 de la branche 3 de manière à empêcher toute déformation de la cavité 43 par pression. Autrement dit, l'élément de verrouillage 51 permet de maintenir les mâchoires 41, 42 fermées pour serrer le verre 2. Comme illustré à la figure 5, la branche 3 comporte une fente 430 permettant l'accès à la cavité 43.

Dans cet exemple, de manière tout à fait avantageuse, l'élément de verrouillage 51 coopère avec la cavité 43 de manière à former une articulation d'axe Z3. Ainsi, l'élément de verrouillage 51 permet, d'une part, de maintenir les mâchoires 41, 42 serrées et, d'autre part, d'articuler la partie arrière 5 de la branche 3 avec sa partie avant 4. Comme illustré à la figure 3, l'élément de verrouillage 51 possède une section cylindrique dont le diamètre est sensiblement égal à celui de la cavité 43 en l'absence de pression.

Le montage de la branche 3 est particulièrement simple à réaliser étant donné qu'il suffit à l'opticien d'appuyer sur la partie de liaison 4B pour que la partie de connexion 4A s'ouvre afin de permettre l'insertion du bord du verre 2. Ensuite, lorsque la pression est arrêtée, du fait de sa flexibilité, la partie avant 4 se referme, les dents 44 de la mâchoire avant 42 pénétrant dans les orifices de branche 21 pour serrer le bord du verre 2. Grâce aux dents 44, la position de la partie avant 4 est parfaitement définie par rapport au verre 2.

Lors de l'introduction de l'élément de verrouillage 51 dans la cavité 43 de la partie avant 4 de la branche 3 via la fente de montage 430, les mâchoires 41, 42 sont contraintes en position de fermeture du fait de la flexibilité de la partie avant 4, ce qui vient sécuriser le serrage du verre 2. Du même coup, la partie arrière 5 est articulée à la partie avant 4 de la branche 3, ce qui permet à la branche 3 de s'étendre perpendiculairement ou parallèlement au verre 2. Selon un aspect préféré, la branche 3 peut comprendre des moyens de sécurisation du montage de la partie arrière 5 dans la partie avant 4 afin d'éviter tout retrait involontaire, par exemple, un capot ou une goupille.

Il a été présenté un verre 2 comportant deux orifices de branche 21 mais il va de soi que l'invention s'applique également à un verre comportant un unique orifice de branche 21 ou plus de deux orifices de branche 21. De même, chaque orifice 21 n'est pas nécessairement traversant et pourrait être uniquement borgne.

De manière avantageuse, la partie arrière 5 de la branche 3 peut être retirée de la partie avant 4 afin de permettre la libération du verre de manière aisée. La monture peut ainsi être aisément remplacée. Un ou plusieurs verres peuvent être également aisément remplacés. Selon un aspect préféré, une ou plusieurs parties de la branche peuvent être remplacées afin de changer l'aspect esthétique de la monture.

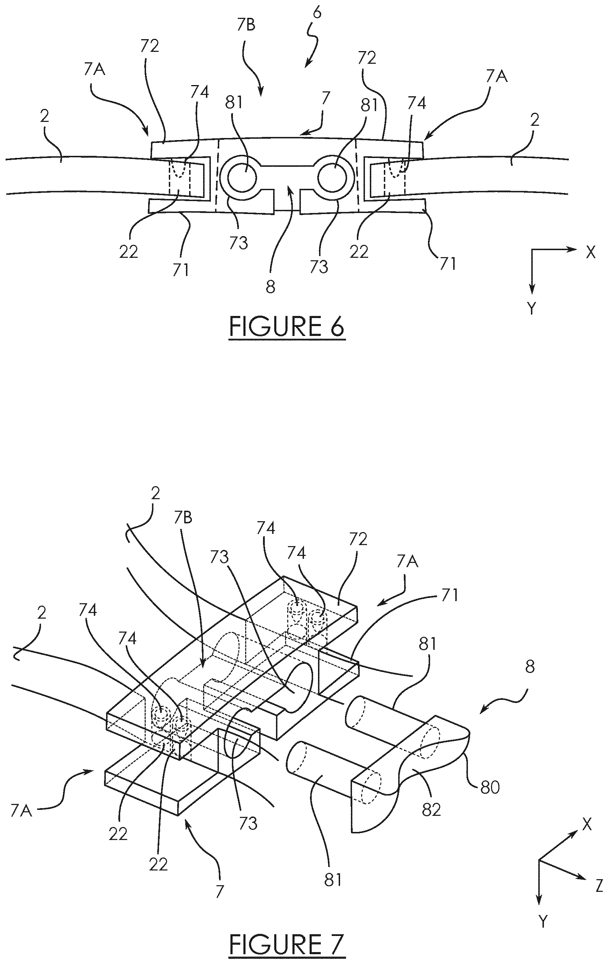

En référence aux figures 6 et 7, chaque verre 2 s'étend sensiblement dans un plan (X, Z) dit « de face avant » et comporte à une extrémité deux orifices de pont 22 traversants réalisés, dans cet exemple, par perçage. Les orifices de pont 22 sont alignés verticalement selon l'axe Z et formés à l'extrémité opposée du verre 2 par rapport aux orifices de branche 21. Il va de soi qu'ils pourraient être alignés selon tout axe appartenant au plan de face avant.

Comme illustré aux figures 6 et 7, le pont central 6 comporte un organe principal 7 et un organe auxiliaire 8 qui coopère avec l'organe principal 7. L'organe principal 7 du pont central 6 s'étend longitudinalement selon l'axe X et comporte une partie centrale de liaison 7B et, à chacune de ses extrémités, une partie de connexion 7A.

Chaque partie de connexion 7A forme un élément de serrage qui comporte deux mâchoires 71, 72 adaptées pour serrer un verre de lunettes 2. Dans cet exemple, la partie de liaison 7B comporte deux cavités 73, s'étendant verticalement, configurées pour permettre l'ouverture desdites mâchoires 71, 72 suite à une pression. Autrement dit, chaque paire de mâchoires 71, 72 est associée à une cavité 73. Ainsi, à la manière d'une pince à linge, si l'opérateur déforme par pression une cavité 73, les mâchoires associées 71, 72 s'écartent du fait de la flexibilité de l'élément de serrage. Lors de la pression, la section de la cavité 73 diminue. Au contraire, en l'absence de pression, les mâchoires 71, 72 sont fermées et serrent entre elles le bord du verre 2. Par la suite, chaque première mâchoire 71 est désignée « mâchoire arrière 71 » tandis que chaque deuxième mâchoire 72 est désignée « mâchoire avant 72 ». De manière préférée, les mâchoires 71, 72 sont convexes ou concaves afin de s'adapter à la forme du verre 2 à serrer.

De manière préférée, de manière similaire aux branches 3, en référence aux figures 6 et 7, chaque mâchoire avant 72 comprend deux dents 74 adaptées pour s'introduire dans les deux orifices de pont 22 du verre 2. Ainsi, la position du pont central 6 par rapport au verre 2 est parfaitement définie. Comme indiqué précédemment, l'utilisation de dents 74 permet de serrer fermement le verre 2 en évitant tout déplacement relatif. Par souci de clarté, les caractéristiques et avantages analogues à la liaison de la branche 3 ne seront pas présentés. Dans cet exemple, l'organe principal 7 est monobloc.

En référence aux figures 6 et 7, l'organe auxiliaire 8 du pont central 6 comporte un corps 80 s'étendant longitudinalement selon l'axe X qui comprend une empreinte 82 adaptée pour être en contact avec le nez du porteur de lunettes. De manière avantageuse, l'opticien peut disposer d'une collection d'organes auxiliaires 8 dont les empreintes 82 sont différentes afin de s'adapter à des morphologies différentes. Comme illustré aux figures 6 et 7, l'organe auxiliaire 8 comprend deux éléments de verrouillage 81 s'étendant verticalement selon l'axe Z de manière à pouvoir coopérer avec les cavités 73 de l'organe principal 7. Dans cet exemple, l'organe auxiliaire 8 est monobloc.

De manière similaire à un élément de verrouillage 51 de la branche 3, chaque élément de verrouillage 81 de l'organe auxiliaire 8 est configuré pour être monté dans une cavité 73 de manière à empêcher toute déformation de la cavité 73 par pression. Autrement dit, l'élément de verrouillage 81 permet de maintenir les mâchoires 71, 72 fermées pour serrer le verre 2.

Ainsi, le pont central 6 comporte deux éléments de serrage qui peuvent être verrouillés de manière aisée et simultanée par insertion de l'organe auxiliaire 8 dans l'organe principal 7.

Le montage du pont central 6 est particulièrement simple à réaliser étant donné qu'il suffit à l'opticien d'appuyer sur la partie de liaison 7B de l'organe principal 7 pour qu'une des parties de connexion 7A s'ouvre afin de permettre l'insertion du bord du verre 2. Ensuite, lorsque la pression est arrêtée, du fait de sa flexibilité, les mâchoires 71, 72 se referment, les dents 74 de la mâchoire avant 72 pénétrant dans les orifices de pont 22 pour serrer le bord du verre 2. Ces étapes sont répétées pour la liaison de chaque verre 2. Pour verrouiller l'organe principal 7 du pont central 6, l'organe auxiliaire 8 est introduit du bas vers le haut dans l'organe principal 7 de manière à ce que chaque élément de verrouillage 81 pénètre dans une cavité 73 de l'organe principal 7, les mâchoires 71, 72 sont contraintes en position de fermeture du fait de la flexibilité des parties de connexion 7A, ce qui vient sécuriser le serrage des deux verres 2 de manière simultanée.

Il a été présenté un verre 2 comportant deux orifices de pont 22 mais il va de soi que l'invention s'applique également à un verre 2 comportant un unique orifice de pont 22 ou plus de deux orifices de pont 22. De même, chaque orifice de pont 22 n'est pas nécessairement traversant et pourrait être uniquement borgne.

Grâce à l'invention, l'ensemble de la monture de lunettes peut être montée de manière simple et rapide tout en pouvant être démontée de manière aisée. En pratique, la monture peut être associée aux deux verres en une dizaine de seconde, ce qui procure un gain de temps important.

De manière alternative, le pont central 6 comporte un organe principal 7 et deux organes auxiliaires se présentant chacun sous la forme d'une plaquette de nez intégrant un élément de verrouillage d'une cavité 73 de l'organe principal 7. Ainsi, on verrouille les mâchoires 71, 72 de l'organe principal 7 lors de la mise en place des plaquettes de nez. En outre, l'opticien peut sélectionner la plaquette de nez la plus adaptée à la morphologie de l'utilisateur, ce qui est avantageux.

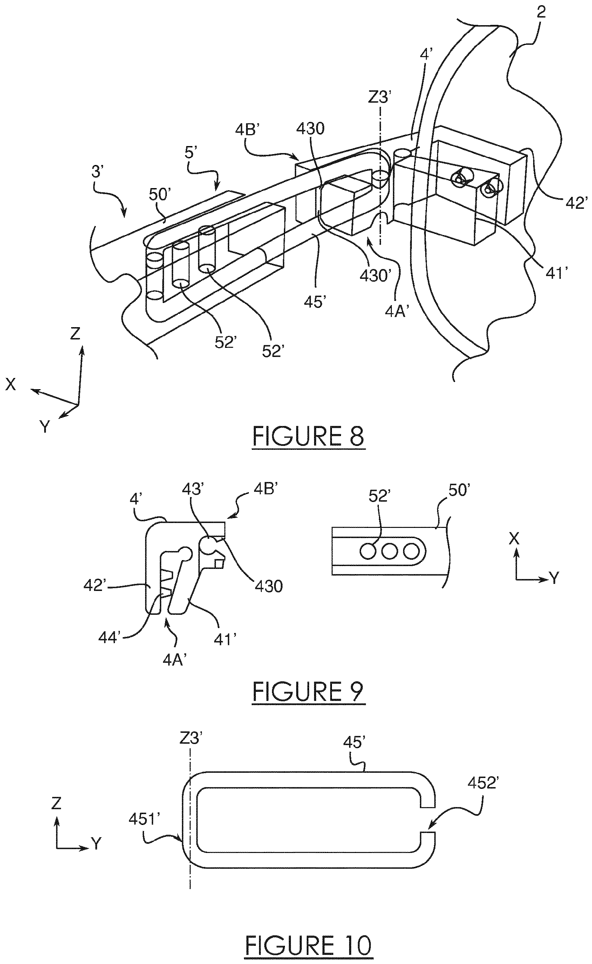

En référence à la figure 8, il est représenté une autre forme de réalisation d'une branche 3' qui comporte une partie avant 4' reliée au verre 2 et une partie arrière 5' destinée à être en contact avec la tempe de l'utilisateur qui est articulée. La partie arrière 5' comporte un premier élément 50' et un deuxième élément 45'. Le deuxième élément 45' est articulé avec la partie avant 4' mais est relié de manière réglable avec le premier élément 50' de la partie arrière 5'.

Dans cet exemple, en référence aux figures 8 et 9 et de manière similaire à la première forme de réalisation, la partie avant 4' de la branche 3' se présente sous la forme d'un élément de serrage flexible comportant une partie de connexion 4A' comportant deux mâchoires 41', 42' adaptées pour serrer le verre de lunettes 2 et une partie de liaison 4B' comportant une cavité 43', s'étendant verticalement, configurée pour permettre l'ouverture desdites mâchoires 41', 42' suite à une pression. Dans cet exemple, la cavité 43' est ouverte latéralement par une fente 430'. Comme indiqué précédemment, si l'opérateur déforme par pression la cavité 43', les mâchoires 41', 42' s'écartent du fait de la flexibilité de l'élément de serrage à la manière d'une pince à linge. Comme illustré à la figure 9, une des mâchoires 41', 42' comporte des dents 44' pour serrer le verre 2 comme illustré à la figure 8. Dans cet exemple, la partie avant 4' de la branche 3' est coudée à 90°.

Comme illustré aux figures 8 et 9, le premier élément 50' de la partie arrière 5' de la branche 3' comporte un corps longitudinal, adapté pour venir en contact avec les tempes d'un utilisateur, et une pluralité d'ouvertures de montage 52' dont l'axe s'étend, de préférence, verticalement. Les ouvertures de montage 52' sont alignées longitudinalement dans le corps du premier élément 50' de la partie arrière 5' de la branche 3' afin de permettre le réglage de la longueur de la branche 3' comme cela sera présenté par la suite.

Le deuxième élément 45' de la partie arrière 5' de la branche 3' se présente sous la forme d'une boucle dont la périphérie est ouverte de manière à définir deux extrémités en regard l'une de l'autre comme illustré à la figure 10. Le deuxième élément 45' est de forme sensiblement rectangulaire de manière à définir une longueur et une largeur, la périphérie de la boucle étant ouverte au niveau de sa largeur. Aussi, le deuxième élément 45' comporte une largeur pleine 451' et une largeur ouverte 452' comme illustré à la figure 10.

La largeur pleine 451' du deuxième élément 45' peut être introduite, de préférence en force, dans la cavité 43' de la partie avant 4' via la fente 430' afin de permettre au deuxième élément 45' de s'articuler avec la partie avant 4' selon un axe d'articulation Z3'. De manière analogue à la première forme de réalisation, le montage verrouille les mâchoires 41', 42' sur le verre 2. Autrement dit, la largeur pleine 451' forme un élément de verrouillage.

De manière analogue, la largeur ouverte 452' du deuxième élément 45' peut être introduite dans une des ouvertures 52' du premier élément 50' de la partie arrière 5' en jouant sur la flexibilité des extrémités du deuxième élément 45'. Le deuxième élément 45' est alors relié avec le premier élément 50'. En fonction de l'ouverture sélectionnée 52', la longueur de la branche 3' est modifiée.

De manière similaire à la première forme de réalisation, la branche 3' peut être montée/démontée de manière pratique et rapide sans l'aide d'outils.

Grâce à cette forme de réalisation, on peut avantageusement régler la longueur de la branche 3' de manière pratique et permettre un pliage optimal de la branche 3'.

## Revendications

1. Monture de lunettes sans bord comprenant :
- au moins une branche de lunettes (3 ; 3'), ladite branche (3 ; 3') comprenant une partie avant (4, 4') comportant au moins un élément de serrage flexible et une partie arrière (5, 5') comportant au moins un élément de verrouillage (51 ; 451'),
- l'élément de serrage flexible comportant au moins une partie de connexion (4A ; 7A ; 4A') comportant au moins deux mâchoires (41, 42 ; 71, 72 ; 41', 42') adaptées pour serrer un verre de lunettes (2) et au moins une partie de liaison (4B ; 7B ; 4B') comportant au moins une cavité (43 ; 73 ; 43') configurée pour permettre l'ouverture desdites mâchoires (41, 42 ; 71, 72 ; 41', 42') suite à une pression de ladite cavité (43 ; 73 ; 43'),
- l'élément de verrouillage (51 ; 81 ; 451') étant monté dans ladite cavité (43 ; 73 ; 43') de la partie de liaison (4B ; 7B ; 4B') de l'élément de serrage (4 ; 7 ; 4') selon un axe vertical (Z3) de manière à verrouiller la fermeture desdites mâchoires (41, 42 ; 71, 72 ; 41', 42'), l'élément de serrage flexible étant articulé autour dudit axe vertical (Z3) avec l'élément de verrouillage (51 ; 451') afin de permettre un pliage de la branche (3 ; 3').

2. Monture selon la revendication 1, dans laquelle ledit élément de serrage (4 ; 7 ; 4') est monobloc.

3. Monture selon l'une des revendications 1 et 2, dans laquelle ledit élément de serrage (4 ; 7 ; 4') est en matière plastique.

4. Monture selon l'une des revendications 1 à 3, dans laquelle au moins une desdites mâchoires (41, 42 ; 71, 72 ; 41', 42') comporte au moins une dent (44 ; 74 ; 44') adaptée pour coopérer avec un orifice d'un verre de lunettes (2).

5. Monture selon l'une des revendications 1 à 4, dans laquelle la partie arrière (5') de ladite branche (3 ') comprend un premier élément (50') et un deuxième élément (45') qui sont reliés de manière réglable.

6. Paire de lunettes (1) comportant deux verres (2) et une monture de lunettes selon l'une des revendications 1 à 5.

7. Procédé de montage d'une paire de lunettes (1) sans bord selon la revendication 6 comprenant :
- une étape de pression de la cavité (43 ; 73 ; 43') de l'élément de serrage flexible de manière à ouvrir les mâchoires (41, 42 ; 71, 72 ; 41', 42') ;
- une étape d'insertion d'un verre (2) entre lesdites mâchoires (41, 42 ; 71, 72 ; 41', 42') ;
- une étape d'arrêt de la pression de manière à fermer lesdites mâchoires (41, 42 ; 71, 72 ; 41', 42') et serrer le verre (2) ;
- une étape de montage de l'élément de verrouillage (51 ; 81 ; 451') dans ladite cavité (43 ; 73 ; 43') de l'élément de serrage de manière à verrouiller la fermeture desdites mâchoires (41, 42 ; 71, 72 ; 41', 42') sur le verre (2).

## Patentansprüche

1. Randlose Brillenfassung, umfassend:
- mindestens einen Brillenbügel (3; 3'), wobei der Bügel (3; 3') einen vorderen Teil (4, 4') umfasst, aufweisend mindestens ein flexibles Spannelement, und einen hinteren Teil (5, 5'), aufweisend mindestens ein Verriegelungselement (51; 451'),
- wobei das flexible Spannelement mindestens einen Anschlussteil (4A; 7A; 4A') aufweist, aufweisend mindestens zwei Backen (41, 42; 71, 72; 41', 42'), die zum Spannen eines Brillenglases (2) geeignet sind, und mindestens einen Verbindungsteil (4B; 7B; 4B'), aufweisend mindestens einen Hohlraum (43; 73; 43'), der konfiguriert ist, um das Öffnen der Backen (41, 42; 71, 72; 41', 42') infolge eines Drucks auf den Hohlraum (43; 73; 43') zu gestatten,
- wobei das Verriegelungselement (51; 81; 451') in dem Hohlraum (43; 73; 43') des Verbindungsteils (4B; 7B; 4B') des Spannelements (4; 7; 4') gemäß einer vertikalen Achse (Z3) derart angebracht ist, dass der Verschluss der Backen (41, 42; 71, 72; 41', 42') verriegelt ist, wobei das flexible Spannelement um die vertikale Achse (Z3) mit dem Verriegelungselement (51; 451') angelenkt ist, um ein Zusammenlegen des Bügels (3; 3') zu gestatten.

2. Fassung nach Anspruch 1, wobei das Spannelement (4; 7; 4') einstückig ist.

3. Fassung nach einem der Ansprüche 1 und 2, wobei das Spannelement (4; 7; 4') aus Kunststoff ist.

4. Fassung nach einem der Ansprüche 1 bis 3, wobei mindestens eine der Backen (41, 42; 71, 72; 41', 42') mindestens einen Zahn (44; 74; 44') aufweist, der geeignet ist, um mit einer Öffnung eines Brillenglases (2) zusammenzuwirken.

5. Fassung nach einem der Ansprüche 1 bis 4, wobei der hintere Teil (5') des Bügels (3') ein erstes Element (50') und ein zweites Element (45') umfasst, die einstellbar verbunden sind.

6. Brille (1), aufweisend zwei Gläser (2) und eine Brillenfassung nach einem der Ansprüche 1 bis 5.

7. Montageverfahren einer randlosen Brille (1) nach Anspruch 6, umfassend:
- einen Schritt des Drückens auf den Hohlraum (43; 73; 43') des flexiblen Spannelements derart, dass sich die Backen (41, 42; 71, 72; 41', 42') öffnen;
- einen Schritt des Einsetzens eines Glases (2) zwischen den Backen (41, 42; 71, 72; 41', 42');
- einen Schritt des Beendens des Drucks derart, um die Backen (41, 42; 71, 72; 41', 42') zu schließen und das Glas (2) zu spannen;
- einen Schritt der Montage des Verriegelungselements (51; 81; 451') im Hohlraum (43; 73; 43') des Spannelements derart, um den Verschluss der Backen (41, 42; 71, 72; 41', 42') auf dem Glas (2) zu verriegeln.

## Claims

1. Rimless glasses frame comprising:
- at least one glasses arm (3; 3'), said arm (3; 3') comprising a front part (4, 4') comprising at least one flexible clamping element and a rear part (5, 5') comprising at least one locking element (51; 451'),
- the flexible clamping element comprising at least one connecting part (4A; 7A; 4A') comprising at least two jaws (41, 42; 71, 72; 41', 42') suitable for clamping a glasses lens (2) and at least one linking part (4B; 7B; 4B') comprising at least one cavity (43; 73; 43') configured to make it possible to open said jaws (41, 42; 71, 72; 41', 42') following a pressure of said cavity (43; 73; 43'),
- the locking element (51; 81; 451') being mounted in said cavity (43; 73; 43') of the linking part (4B; 7B; 4B') of the clamping element (4; 7; 4') along a vertical axis (Z3) so as to lock the closing of said jaws (41, 42; 71, 72; 41', 42'), the flexible clamping element being hinged about said vertical axis (Z3) with the locking element (51; 451') in order to make it possible for a folding of the arm (3; 3').

2. Frame according to claim 1, wherein said clamping element (4; 7; 4') is one-piece.

3. Frame according to one of claims 1 and 2, wherein said clamping element (4; 7; 4') is made of plastic material.

4. Frame according to one of claims 1 to 3, wherein at least one of said jaws (41, 42; 71, 72; 41', 42') comprises at least one tooth (44; 74; 44') suitable for cooperating with an orifice of a glasses lens (2).

5. Frame according to one of claims 1 to 4, wherein the rear part (5') of said arm (3') comprises a first element (50') and a second element (45') which are linked so that they can be adjusted.

6. Pair of glasses (1) comprising two lenses (2) and a glasses frame according to one of claims 1 to 5.

7. Method for mounting a pair of rimless glasses (1) according to claim 6 comprising:
- a step of pressurising the cavity (43; 73; 43') of the flexible clamping element so as to open the jaws (41, 42; 71, 72; 41', 42');
- a step of inserting a lens (2) between said jaws (41, 42; 71, 72; 41', 42');
- a step of stopping the pressure so as to close said jaws (41, 42; 71, 72; 41', 42') and to clamp the lens (2);
- a step of mounting the locking element (51; 81; 451') in said cavity (43; 73; 43') of the clamping element so as to lock the closing of said jaws (41, 42; 71, 72; 41', 42') on the lens (2).
